# EUROPÄISCHE PATENTANMELDUNG

(11) **EP 2 248 426 A2**
(43) Veröffentlichungstag der Anmeldung: **10.11.2010**
(21) Anmeldenummer: 10161947.6
(22) Anmeldetag: 05.05.2010
(51) Int. Cl.: A21B 3/04, F28F 3/02

(54) **Dampferzeugungseinrichtung zur Beschwadung eines Backofens, Wanne für eine derartige Dampferzeugungseinrichtung sowie Backofen mit einer derartigen Dampferzeugungseinrichtung**

(30) Priorität: 08.05.2009 DE 102009020441; 03.11.2009 DE 202009014824 U
(71) Anmelder: Werner & Pfleiderer Lebensmitteltechnik GmbH, 91550 Dinkelsbühl (DE)
(72) Erfinder:
(74) Vertreter: Hofmann, Matthias

(57) **Zusammenfassung**

Ein Backofen (1) hat eine Dampferzeugungseinrichtung zur Beschwadung des Backofens (1). Die Dampferzeugungseinrichtung hat eine Wanne (12) zur Bevorratung von zu verdampfendem Wasser. Ein Wannenboden (17) der Wanne (12) hat zur Vergrößerung einer bevorratungsseitigen Bodenoberfläche Wärmeabgabestrukturen (18). Es resultiert ein Backofen, bei dem aufgrund der Ausgestaltung der Wanne der Dampferzeugungseinrichtung die Energieeffizienz bei der Dampf- bzw. Schwadenerzeugung verbessert ist.

## Beschreibung

Die Erfindung betrifft eine Dampferzeugungseinrichtung zur Beschwadung eines Backofens nach dem Oberbegriff des Anspruchs 1. Ferner betrifft die Erfindung eine Wanne für eine derartige Dampferzeugungseinrichtung sowie einen Backofen mit mindestens einer derartigen Dampferzeugungseinrichtung.

Dampferzeugungseinrichtungen der eingangs genannten Art sind beispielsweise bekannt aus der DE 202 20 366 U1, der DE 100 44 466 A1 oder der DE 469 321.

Es ist eine Aufgabe der vorliegenden Erfindung, eine Dampferzeugungseinrichtung, eine Wanne hierfür sowie einen Backofen hiermit derart auszugestalten, dass die Energieeffizienz bei der Dampf- bzw. Schwadenerzeugung verbessert ist.

Diese Aufgabe ist erfindungsgemäß gelöst durch eine Dampferzeugungseinrichtung mit den im Anspruch 1 angegebenen Merkmalen.

Erfindungsgemäß wurde erkannt, dass eine Vergrößerung einer bevorratungsseitigen Bodenoberfläche des Wannenbodens nicht nur zu einer Erhöhung einer Wärmeübertragungsfläche, sondern auch dazu führt, dass, eine entsprechende Gestaltung der Wanne vorausgesetzt, die Temperatur der bevorratungsseitigen Bodenoberfläche in bestimmten Grenzen unabhängig von einer sonstigen Wannenbodentemperatur gehalten werden kann. Ein Überhitzen der erzeugten Schwaden wird auf diese Weise verhindert. Dies erhöht zudem die Energieeffizienz der Schwadenerzeugung, da der Wannenboden auch als Wärmepuffer genutzt werden kann und hieraus eine kontrollierte und reproduzierbare Dampferzeugung resultiert.

Eine abschnittsweise Gestaltung der Wärmeabgabestrukturen nach Anspruch 2 hat sich zur Optimierung eines Temperaturprofils der Wärmeabgabestrukturen als besonders geeignet herausgestellt. Die Temperatur des Strukturspitzenabschnitts kann über die Gestaltung des Strukturverbindungsabschnitts beeinflusst werden. Auf diese Weise lassen sich die Wärmeabgabestrukturen an die jeweiligen Temperaturverhältnisse sowie an die Erfordernisse, die an die Beschwadung des jeweiligen Backofens gestellt sind, anpassen.

Ein Strukturverlauf nach Anspruch 3 führt zu einer kostengünstigen Herstellung des Wannenbodens. Alternativ können die Wärmeabgabestrukturen als Spitzenstrukturen ausgebildet sein und beispielsweise eine kegelförmige oder kegel- bzw. pyramidenstumpfförmige Gestalt haben.

Zwischenräume nach Anspruch 4 sorgen für einen ungehinderten Zugang des für die Beschwadung zu bevorratenden Wassers zu allen Bereichen der Wärmeabgabestrukturen.

Ein sägezahnförmiger Querschnitt nach Anspruch 5 lässt sich kostengünstig herstellen. Auch ein anderer, insbesondere kontinuierlich verlaufender Querschnitt, beispielsweise ein wellenförmiger Querschnitt, der Wärmeabgabestrukturen ist möglich.

Boden-Wärmeaufnahmestrukturen nach Anspruch 6 und Seiten-Wärmeaufnahmestrukturen nach Anspruch 7 verbessern den Wärmeübergang im Bereich der Wärmeaufnahmefläche. Eine Erhitzung der Wanne beispielsweise durch vorbeiströmende Umluft ist hierdurch effizient möglich.

Wärmeaufnahmestrukturen in Form von vertikal in der Seitenwand ausgeführten Rippen nach Anspruch 8 oder in Form von regelmäßig angeordneten Aufnahmefingern Anspruch 9 haben sich zum effizienten Wärmeübergang als besonders geeignet herausgestellt. Derartige Wärmeaufnahmestrukturen können am Boden und/oder an mindestens einer der beiden Seiten der Wanne ausgeführt sein. Ein effizienter Wärmeübergang kann insbesondere mit einer matrixartigen Anordnung der Aufnahmefinger erreicht werden. Hierbei hat sich überraschend herausgestellt, dass auch innerhalb einer Reihe bzw. Spalte dieser Matrix im Windschatten angeordnete Aufnahmefinger dennoch für einen effizienten Wärmeübergang sorgen, da hierbei Turbulenzeffekte genutzt werden können. Durch eine zylindrische Ausgestaltung der Aufnahmefinger können einerseits Fertigungsvorteile ermöglicht und andererseits eine Struktur mit hohem Wärmeübergang dargestellt werden.

Die Vorteile einer Wanne nach Anspruch 10 entsprechen denen, die vorstehend in Zusammenhang mit der Dampferzeugungseinrichtung bereits erläutert wurden. Neben der Wanne weist die Dampferzeugungseinrichtung noch eine Heizquelle auf.

Die Vorteile eines Backofens nach Anspruch 11 entsprechen denen, die vorstehend unter Bezugnahme auf die erfindungsgemäße Dampferzeugungseinrichtung bereits erläutert wurden. Der Backofen kann eine Mehrzahl derartiger Dampferzeugungseinrichtungen, beispielsweise zwei, drei, vier, fünf oder noch mehr derartiger Dampferzeugungseinrichtungen, aufweisen. Dabei können die Dampferzeugungseinrichtungen eine gemeinsam genutzte, zentrale Heizquelle haben. Alternativ ist es möglich, jeder Wanne eine eigene Heizquelle, beispielsweise eine elektrische Wannenheizung, zuzuordnen.

Bei einem Umluft-Backofen kommen die Vorteile der erfindungsgemäßen Dampferzeugungseinrichtung besonders gut zum Tragen.

Eine Anordnung nach Anspruch 13 führt zu einer besonders effizienten Energienutzung der Umluft.

Dies gilt insbesondere für eine nach Anspruch 14 orientierte Wanne. Es kann dabei ein Strömungsweg der Umluft nach dem Teiglings-Aufnahmebereich genutzt werden, bei dem die Umluft zunächst am Boden und danach an der dem Teiglings-Aufnahmebereich abgewandten Seite der Wanne vorbeistreicht.

Eine Ausbildung nach Anspruch 15 erlaubt ein bequemes Bestücken des Backofens mit auszubackenden Teiglingen. Der Backwagen kann insbesondere auf einem Drehteller angeordnet werden, was eine gleichmäßige Beaufschlagung der Teiglinge mit Umluft gewährleistet.

Ein Ausführungsbeispiel der Erfindung wird nachfolgend anhand der Zeichnung näher erläutert. In dieser zeigen:
- Figur 1: schematisch einen vertikalen Querschnitt durch einen Backofen mit einer Mehrzahl von Wannen als Bestandteil einer Dampfer- zeugungseinrichtung und einem auf einem Drehteller aufge- nommenen Stikkenwagen;
- Figur 2: stärker im Detail eine der Wannen nach Figur 1 in einer stirnsei- tigen Ansicht, wobei nicht sichtbare Kanten gestrichelt angedeu- tet sind;
- Figur 3: eine weitere Seitenansicht der Wanne mit Blickrichtung III in Figur 2;
- Figur 4: eine Aufsicht auf die Wanne gemäß Blickrichtung IV in Figur 3;
- Figur 5: eine Unteransicht der Wanne gemäß Blickrichtung V in Figur 3;
- Figur 6: im Vergleich zu den Figuren 2 bis 5 vergrößert einen Schnitt gemäß Linie VI-VI in Figur 3; und
- Figur 7: perspektivisch eine Ansicht der Wanne schräg von unten her, sodass zylindrische Wärmeaufnahmestrukturen zu sehen sind, die an einer Wärmeaufnahmefläche eines massiven Bodenkör- pers der Wanne angeordnet sind;
- Fig. 8: in einer zu Fig. 6 ähnlichen Darstellung eine weitere Ausfüh- rung einer Wanne als Bestandteil einer Dampferzeugungsein- richtung eines Backofens; und
- Fig. 9: gemäß Blickrichtung IX in Fig. 8 eine hälftig als vertikaler Halbschnitt ausgeführte Ansicht der Wanne.

Ein Backofen 1 zum gewerblichen Ausbacken von Teiglingen, zum Beispiel von Brötchen, ist als Umluft-Backofen ausgestaltet. In einem Aufnahmeraum 2 des Backofens 1 kann ein Backwagen 3 in Form eines Stikkenwagens aufgenommen werden. Hierzu hat der Backofen 1 einen am Boden des Aufnahmeraums 2 montierten Drehteller 4, auf dem der Backwagen 3 fixiert werden kann. Beim Backen dreht sich der Drehteller 4 mit vorgegebener Geschwindigkeit.

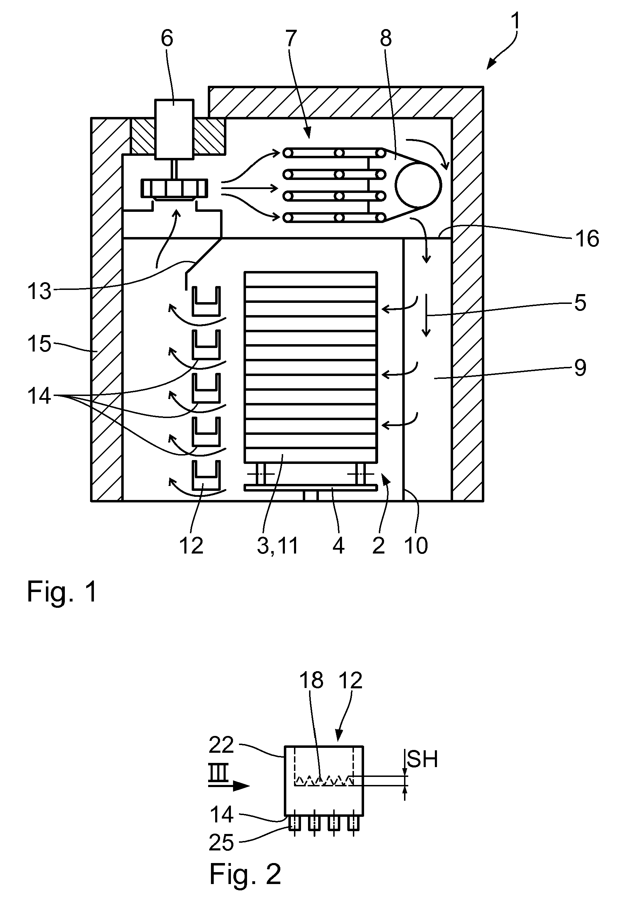

Zur Förderung der Umluft, deren Strömungsweg in der Figur 1 durch Richtungspfeile 5 dargestellt ist, hat der Backofen 1 einen Umwälzventilator 6, der in einem oberhalb des Aufnahmeraums 3 gelegenen Versorgungsraum 7 des Backofens 1 untergebracht ist. Dem Umwälzventilator 6 im Strömungsweg der Umluft nachgeordnet ist eine Wärmetauscher-/Brennereinheit 8. Ein Brenner der Wärmetauscher-/Brennereinheit 8 erzeugt erhitzte Abgase, die im Wärmetauscher der Wärmetauscher-/ Brennereinheit 8 Wärme an die Umluft abgeben. Der Wärmetauscher-/ Brennereinheit 8 im Strömungsweg der Umluft nachgeordnet ist ein Druckraum 9, der seitlich des Aufnahmeraums 2 angeordnet ist. Zwischen dem Druckraum 9 und dem Aufnahmeraum 2 ist eine Düsenwand 10 mit einer Vielzahl von Durchtrittsöffnungen für die Umluft angeordnet.

Einem Aufnahmebereich 11 des Aufnahmeraums 2 für den Backwagen 3, also einem Teigling-Aufnahmebereich, im Strömungsweg der Umluft nachgeordnet sind insgesamt fünf übereinander angeordnete Wannen 12, die auch als Schwadenwannen bezeichnet werden. Die Wannen 12 sind ebenfalls im Aufnahmeraum 2 angeordnet. Die Wannen 12 stellen jeweils die Hauptkomponenten von Dampferzeugungseinrichtungen des Backofens 1 zur Beschwadung von diesem dar und dienen der Bevorratung von zu verdampfenden Wasser. Zusammen mit der Wärmetauscher-/Brennereinheit 8 stellt jede der Wannen 12 eine Dampferzeugungseinrichtung dar. Details der Wannen 12 werden nachfolgend im Zusammenhang mit den Figuren 2 bis 7 noch erläutert. Der im Aufnahmebereich 11 aufgenommene Backwagen 3 ist zwischen der Düsenwand 10 einerseits und den übereinander angeordneten Wannen 12 angeordnet. Im Strömungsweg der Umluft ist den Wannen 12 wiederum der Umwälzventilator 6 mit einem Antriebsmotor nachgeordnet. Ein oberhalb der obersten Wanne 12 angeordnetes Umluft-Leitblech 13 stellt sicher, dass die Umluft jeweils an bodenseitigen Wärmeaufnahmeflächen 14 der Wannen 12 vorbeistreichen muss.

Der Backofen 1 hat ein wärmeisoliertes Gehäuse 15. Zwischen dem Versorgungsraum 7 einerseits sowie dem Aufnahmeraum 2 und dem Druckraum 9 andererseits liegt eine umluftdurchlässige Trennwand 16 des Backofens 1.

Die Figuren 2 bis 7 zeigen nähere Details einer der Wannen 12, die allesamt gleich aufgebaut sind.

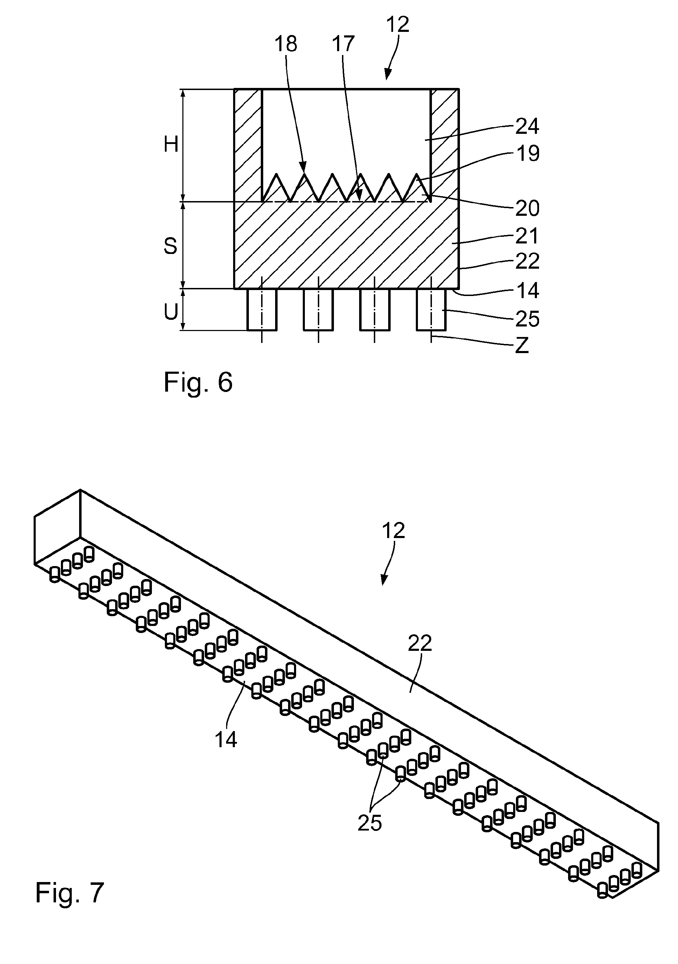

Ein Wannenboden 17 der Wanne 12 hat zur Vergrößerung einer bevorratungsseitigen Bodenoberfläche erhabene Wärmeabgabestrukturen 18. Jede der Wärmeabgabestrukturen 18 hat einen Strukturspitzenabschnitt 19, der über einen wärmeübertragenden Strukturverbindungsabschnitt 20 mit einem massiven Bodenkörper 21 der Wannen 12 verbunden ist. Eine Bodenstärke S (vgl. Figur 6) des Bodenkörpers 21 hat dabei in etwa die gleiche Größe wie eine maximale Bevorratungshöhe H der Wanne 12 für das zu bevorratende Wasser.

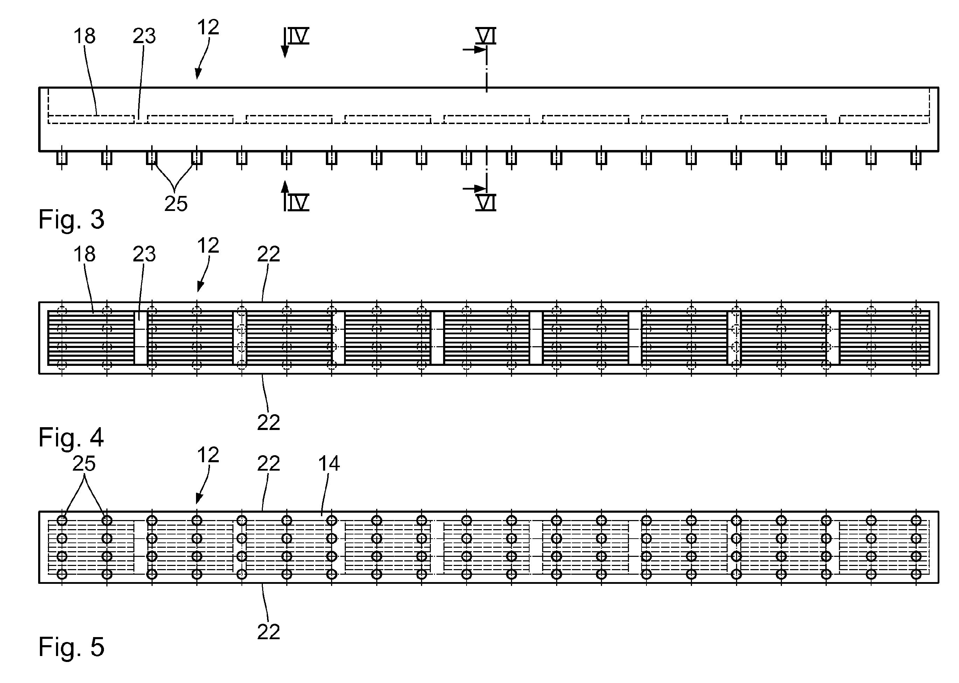

Die Wärmeabgabestrukturen 18 sind als längs einer Längsseite 22 der Wanne 12 verlaufende Strukturen ausgebildet. Die Wärmeabgabestrukturen 12 haben (vgl. Figuren 2 und 6) einen sägezahnförmigen Querschnitt. Die Wärmeabgabestrukturen 18 sind (vgl. Figuren 3 bis 5) durch quer zu ihrem Verlauf angeordnete Zwischenräume 23 unterbrochen. Insgesamt liegen bei der dargestellten Ausführung längs des Verlaufs der Wärmeabgabestrukturen 18 acht derartiger Zwischenräume 23 vor, wobei die Zwischenräume 23 eine Gesamt-Unterbrechungserstreckung haben, die etwa einem Fünftel bis einem Zehntel der gesamten Längserstreckung der Wärmeabgabestrukturen 18 entspricht.

Ein Verhältnis einer Strukturhöhe SH der Wärmeabgabestrukturen 18 zur Bodenstärke S bzw. zur Bevorratungshöhe H beträgt etwa 1:4. Auch andere Verhältnisse, beispielsweise im Bereich zwischen 1:20 und 1:2, sind möglich.

Zur Vergrößerung der Wärmeaufnahmeflächen 14, die einer Bevorratungsseite 24 des Bodenkörpers 21 gegenüberliegen, hat die Wanne 12 Boden-Wärmeaufnahmestrukturen 25. Letztere sind als matrixartig regelmäßig angeordnete, zylindrische Aufnahmefinger ausgebildet.

Bei der dargestellten Ausführung der Wanne 12 liegen insgesamt vier längs der Längsseite 23 verlaufende Reihen zu je zwanzig dieser Wärmeaufnahmestrukturen 25 vor, sodass insgesamt achtzig der Wärmeaufnahmestrukturen 25 pro Bodenkörper 21 vorhanden sind. Der Zylinderdurchmesser der Wärmeaufnahmestrukturen 25 ist etwa halb so groß wie ein Überstand U der Wärmeaufnahmestrukturen 25 über die sonstige Wärmeaufnahmefläche 14. Dieser Überstand U ist in etwa so groß wie die Strukturhöhe SH der Wärmeabgabestrukturen 18. Zylinderachsen Z der Wärmeaufnahmestrukturen 25 verlaufen senkrecht zum Wannenboden 17 und zur sonstigen Wärmeaufnahmefläche 14.

Der Backofen 1 wird folgendermaßen betrieben: Zur Vorbereitung des Backbetriebs wird der Backwagen 3 mit den zu backenden Teiglingen bestückt und auf dem Drehteller 4 im Aufnahmeraum 2 des Backofens 1 fixiert. Beim Backen fördert der Umwälzventilator 6 die Umluft an der Wärmetauscher-/Brennereinheit 8 vorbei, wo die Umluft zunächst erhitzt wird. Die Umluft durchtritt dann zunächst die Trennwand 16 und anschließend die Düsenwand 10 über deren gesamte Höhe und Breite. Anschließend durchtritt die Umluft gleichmäßig alle Etagen des sich mit vorgegebener Drehzahl auf dem Drehteller 4 drehenden Backwagens 3, sodass alle Teiglinge sehr gleichmäßig von der Umluft erreicht und dadurch gleichmäßig erhitzt und ausgebacken werden. Nach Durchtreten des Backwagens 3 streicht die Umluft an den Wärmeaufnahmestrukturen 25 der beim Beschwadungsvorgang mit Wasser befüllten Wannen 12 vorbei. Die Anordnung der Wanne 12 im Strömungsweg nach dem Backwagen 3 führt dazu, dass die Heizenergie der Umluft zunächst zum Backen und dann zur Schwadenerzeugung genutzt wird. Auf diese Weise ist die Umlufttemperatur beim Backen höher als bei der Schwadenerzeugung, was sich zur effizienten Energienutzung als besonders geeignet herausgestellt hat. Die Umluft ist nach Durchtritt durch den Backwagen 3 noch deutlich mehr als 100° C heiß, sodass der Bodenkörper 21 auf eine entsprechend hohe Temperatur erhitzt wird. Die matrixartige Anordnung der Wärmeaufnahmestrukturen 25 sorgt dabei für einen hocheffizienten Wärmeübergang von der Umluft auf den Bodenkörper 21 der Wannen 12. Über den Bodenkörper 21 und die Wärmeabgabestrukturen 18 beim Beschwadungsvorgang wird die Wärme an das Wasser in den Wannen 12 abgegeben und das Wasser verdampft. Die Zwischenräume 23 sorgen dabei dafür, dass das Wasser sämtliche Wärmeabgabestrukturen ungehindert längs deren gesamter Länge erreichen kann. Die Wärme wird hauptsächlich über die Strukturspitzenabschnitte 19 an das Wasser abgegeben, wobei Wärme über die Strukturverbindungsabschnitte 20 nachgeführt wird. Durch die Ausgestaltung der Wärmeabgabestrukturen 18 mit den Strukturspitzenabschnitten 19 und den Strukturverbindungsabschnitten 20 wird sichergestellt, dass die Strukturspitzenabschnitte 19 in einem vorgegebenen Temperaturbereich gehalten werden, der sich zur effizienten Dampf- bzw. Schwadenerzeugung als besonders geeignet herausgestellt hat. Dieser Temperaturbereich wird aufgrund dieser abschnittsweisen Gestaltung der Wärmeabgabestrukturen 18 auch dann gehalten, wenn der Bodenkörper 21 eine Temperatur beispielsweise von 200° C oder eine noch höhere Temperatur erreicht. Die über die Wannen 12 erzeugten Schwaden verteilen sich dann im Aufnahmeraum 2 des Backofens, sodass alle zu backenden Teiglinge mit Schwaden versorgt werden. Die Verteilung der erzeugten Schwaden kann über einen gegebenenfalls mit verminderter Leistung erfolgenden Betrieb des Umwälzventilators 6 unterstützt werden. Eine Austrocknung der auszubackenden Teiglinge wird auf diese Weise verhindert. Der Umwälzventilator 6 kann während des Beschwadungsvorgangs auch gänzlich deaktiviert sein.

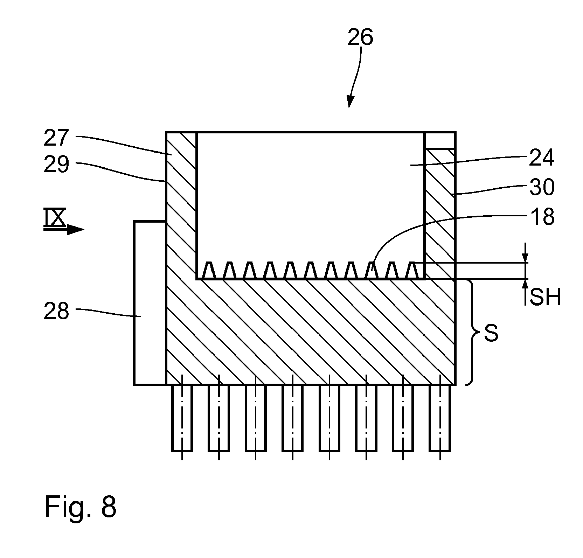

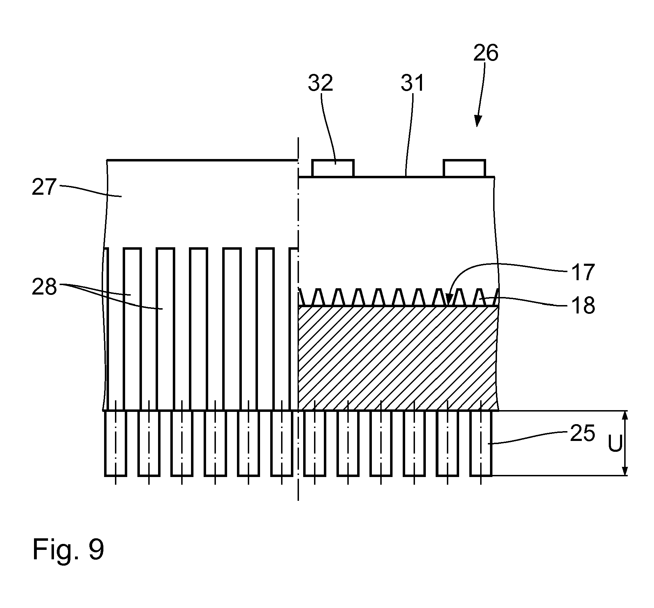

Eine weitere Ausführung einer Wanne 26, die anstelle der Wanne 12 beim Backofen 1 zum Einsatz kommen kann, wird nachfolgend anhand der Figuren 8 und 9 näher erläutert. Komponenten und Funktionen, die denjenigen entsprechen, die vorstehend unter Bezugnahme auf die Fig. 1 bis 7 bereits erläutert wurden, tragen die gleichen Bezugsziffern und werden nicht nochmals im Einzelnen diskutiert.

Eine Seitenwand 27 der Wanne 26, die bei im Backofen 1 installierter Wanne 26 dem Teiglings-Aufnahmebereich 11 abgewandt angeordnet ist, hat außen, also der Bevorratungsseite 24 gegenüberliegend, Seiten-Wärmeaufnahmestrukturen 28. Letztere dienen zur Vergrößerung einer der Bevorratungsseite 24 gegenüberliegenden Wärmeaufnahmefläche 29 der Seitenwand 27.

Die Seiten-Wärmeaufnahmestrukturen 28 sind als vertikal in der Seitenwand 27 ausgeführte Rippen gestaltet. Die Seiten-Wärmeaufnahmestrukturen 28 erstrecken sich dabei vom bodenseitigen Ende der Seitenwand 27 bis auf etwa 2/3 der Höhe der Seitenwand 27. Ein Abstand zweier benachbarter Seiten-Wärmeaufnahmestrukturen 28 ist etwa so groß wie die Breite einer einzelnen Seiten-Wärmeaufnahmestruktur 28, also so groß wie die Breite einer der Rippen. Dieser Abstand kann zwischen 1 mm und 10 mm und bevorzugt im Bereich von 5 mm liegen. Die Wanne 26 hat senkrecht zur Zeichenebene nach Fig. 8 eine Längserstreckung von etwa 1 m. Die Wannenbreite und die Wannenhöhe betragen im Bereich zwischen 50 mm und 70 mm. Bei der Wanne 26 haben die Wärmeabgabestrukturen 18 eine Pyramidenstumpf Form. Die Wärmeabgabestrukturen 18 haben also sowohl im Schnitt nach Fig. 8 als auch im hierzu senkrechten vertikalen Längsschnitt der Wanne 26 nach Fig. 9 einen sägezahnförmigen Querschnitt.

Ein Verhältnis der Strukturhöhe SH zur Bodenstärke S beträgt bei den Wärmeabgabestrukturen 18 der Wanne 26 etwa 1:6.

Die Wärmeabgabestrukturen 18 der Wanne 26 sind auf dem Wannenboden 17 matrixartig gleichverteilt zeilen- und spaltenweise angeordnet. Innerhalb einer der Spalten bzw. einer der Zeilen ist der Abstand zweier benachbarter Wärmeabgabestrukturen 18 der Wanne 26 etwa genauso groß wie der Querschnitt der Wärmeabgabestrukturen 18 am Übergang in den Wannenboden 17. Dieser Querschnitt kann im Bereich zwischen 2 mm und 5 mm liegen.

Bei der Wanne 26 haben die Wärmeaufnahmestrukturen 25 einen Überstand U über den Bodenkörper 21, der ein Mehrfaches der Strukturhöhe SH beträgt. Das Verhältnis U/SH kann im Bereich zwischen 1:1 1 bis 10:1 1 und insbesondere im Bereich zwischen 3:1 und 6:1 liegen. Die Wärmeaufnahmestrukturen 25 sind wiederum matrixartig zeilen- und spaltenweise vom Bodenkörper 21 ausgehend angeordnet. Zeilen- bzw. spaltenweise benachbarte der Wärmeaufnahmestrukturen 25 der Wanne 26 haben einen Abstand zueinander, der in etwa der Hälfte eines Querschnitts der Wärmeaufnahmestrukturen 25 entspricht. Auch die Wärmeaufnahmestrukturen 25 der Wanne 26 sind als zylindrische Aufnahmefinger ausgebildet.

Eine der Seitenwand 27 gegenüberliegende Seitenwand 30 der Wanne 26 trägt an ihrer oberen Stirnfläche 31 gleich verteilt angeordnete Zinnen 32. Der Überstand der Zinnen 32 über die Stirnfläche 31 beträgt bei der Wanne 26 etwa 5 mm und entspricht in etwa dem Überstand der Wärmeabgabestrukturen 18 über den Wannenboden 17. Ein Abstand zwischen zwei benachbarten Zinnen 32 beträgt etwa das Fünffache einer Breite der Zinnen 32.

Zwischen zwei übereinander angeordneten, benachbarten Wannen 12 dienen die Zinnen 32 als Abstandshalter. Oberseiten der Zinnen 32 liegen dabei nicht direkt an der benachbarten Wanne 12 an, sondern an einem der Umluftführung dienenden und in der Zeichnung nicht dargestellten Zwischen-Leitblech. Zwischen benachbarten der Zinnen 32 ergeben sich Öffnungen für den Durchtritt der Schwaden von der Bevorratungsseite 24 hin zum Aufnahmeraum 2. Beim Beschwaden innerhalb des Backofens 1 ist somit sichergestellt, dass die Schwaden effizient von den Wannen 12 hin zum im Aufnahmeraum 2 angeordneten Backwagen 3 gelangen.

Die Funktion der Wanne 26 beim Betrieb des Backofens 1 entspricht derjenigen der Wanne 12, die vorstehend bereits erläutert wurde. Nach Durchtreten des Backwagens 3 streicht die Umluft zunächst an den Boden-Wärmeaufnahmestrukturen 25 der beim Beschwadungsvorgang mit Wasser befüllten Wannen 26 und anschließend an den Seiten-Wärmeaufnahmestrukturen 28 vorbei, sodass ein Wärmeübergang zwischen der Umluft und der Wanne 26 im Vergleich zur Wanne 12 nochmals erhöht ist.

## Patentansprüche

1. Dampferzeugungseinrichtung zur Beschwadung eines Backofens (1)
- mit einer Wanne (12; 26) zur Bevorratung von zu verdampfendem
Wasser,
**dadurch gekennzeichnet, dass** ein Wannenboden (17) der Wanne (12; 26) zur Vergrößerung einer bevorratungsseitigen Bodenoberfläche Wärmeabgabestrukturen (18) aufweist.

2. Dampferzeugungseinrichtung nach Anspruch 1, **dadurch gekennzeichnet, dass** die Wärmeabgabestrukturen (18) einen erhabenen Strukturspitzenabschnitt (19) aufweisen, der über einen wärmeübertragenden Strukturverbindungsabschnitt (20) mit einem massiven Bodenkörper (21) der Wanne (12; 26) verbunden ist.

3. Dampferzeugungseinrichtung nach Anspruch 1 oder 2, **dadurch gekennzeichnet, dass** die Wärmeabgabestrukturen (18) als längs einer Längsseite (22) der Wanne (12) verlaufende Strukturen ausgebildet sind.

4. Dampferzeugungseinrichtung nach Anspruch 3, **dadurch gekennzeichnet, dass** die Wärmeabgabestrukturen (18) durch quer zu ihrem Verlauf angeordnete Zwischenräume (23) unterbrochen sind.

5. Dampferzeugungseinrichtung nach einem der Ansprüche 1 bis 4, **dadurch gekennzeichnet, dass** die Wärmeabgabestrukturen (18) einen sägezahnförmigen Querschnitt aufweisen.

6. Dampferzeugungseinrichtung nach einem der Ansprüche 1 bis 5, **dadurch gekennzeichnet, dass** der Wannenboden (17) zur Vergrößerung einer der Bevorratungsseite (24) gegenüberliegenden Wärmeaufnahmefläche (14) Boden-Wärmeaufnahmestrukturen (25) aufweist.

7. Dampferzeugungseinrichtung nach einem der Ansprüche 1 bis 6, **dadurch gekennzeichnet, dass** mindestens eine Seitenwand (27) der Wanne (26) zur Vergrößerung einer der Bevorratungsseite (24) gegenüberliegenden Wärmeaufnahmefläche (29) Seiten-Wärmeaufnahmestrukturen (28) aufweist.

8. Dampferzeigungseinrichtung nach Anspruch 7, **dadurch gekennzeichnet, dass** die Wärmeaufnahmestrukturen (28) als vertikal in der Seitenwand (27) ausgeführte Rippen gebildet sind.

9. Dampferzeugungseinrichtung nach einem der Ansprüche 6 bis 8, **dadurch gekennzeichnet, dass** die Wärmeaufnahmestrukturen (25) als regelmäßig angeordnete Aufnahmefinger angeordnet sind.

10. Wanne (12; 26) für eine Dampferzeugungseinrichtung nach einem der Ansprüche 1 bis 9.

11. Backofen (1) mit mindestens einer Dampferzeugungseinrichtung nach einem der Ansprüche 1 bis 9.

12. Backofen nach Anspruch 11, **gekennzeichnet durch** eine Ausgestaltung als Umluft-Backofen.

13. Backofen nach Anspruch 13, **dadurch gekennzeichnet, dass** die Wanne (12; 26) der Dampferzeugungseinrichtung im Strömungsweg der Umluft nach einem Teiglings-Aufnahmebereich (11) angeordnet ist.

14. Backofen nach Anspruch 13 unter Rückbeziehung auf Anspruch 7,
**dadurch gekennzeichnet, dass** die Seitenwand (27) mit den Seiten-Wärmeaufnahmestrukturen (28) an der dem Teiglings-Aufnahmebereich (11) abgewandten Seite der Wanne (26) angeordnet ist.

15. Backofen nach einem der Ansprüche 11 bis 14, **gekennzeichnet durch** einen Aufnahmeraum (2), der zur Aufnahme eines Backwagens (3) ausgebildet ist.
